# EUROPÄISCHE PATENTSCHRIFT

(11) **EP 0 981 737 B1**
(45) Veröffentlichungstag und Bekanntmachung des Hinweises auf die Patenterteilung: **25.07.2001**
(21) Anmeldenummer: 98905333.5
(22) Anmeldetag: 22.01.1998
(51) Int. Cl.: G01N 25/18

(54) **SENSOR ZUR BESTIMMUNG DES FEUCHTEGEHALTS**
SENSOR FOR DETERMINING MOISTURE CONTENT
DETECTEUR POUR DETERMINER LA TENEUR EN HUMIDITE

(30) Priorität: 15.05.1997 DE 19720352
(43) Veröffentlichungstag der Anmeldung: 01.03.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: KERSJES, Ralf, D-47058 Duisburg (DE); MOKWA, Wilfried, D-47800 Krefeld (DE)
(74) Vertreter: Schoppe, Fritz, Dipl.-Ing.
(86) Internationale Anmeldenummer: EP9800341
(87) Internationale Veröffentlichungsnummer: WO9852027

(56) Entgegenhaltungen:
- WO-A-96/14572
- US-A- 5 142 901
- W.MOKWA, R.KERSJES: "A fast liquid flow sensor with thermal isolation by oxide-filled trenches." SENSORS AND ACTUATORS, Nr. 46-47a, 1995, Seiten 373-379, XP002066962 in der Anmeldung erwähnt

## Beschreibung

Die vorliegende Erfindung bezieht sich auf einen Sensor zur Bestimmung des Feuchtegehalts, der sowohl zur Bestimmung des Feuchtegrades in Feststoffen als auch als Leckagesensor geeignet ist.

Es sind Sensoren bekannt, die zur Bestimmung der relativen Feuchte in Gasen verwendet werden. Diese Sensoren beruhen in der Regel auf Taupunkthygrometer-Prinzipien, Roßhaar-Prinzipien und dergleichen. Derartige Sensoren sind in der Regel in Gasen anwendbar, jedoch nicht in Feststoffen oder als Leckagesensoren.

Es sind ferner Mikrosensoren bekannt, die die Dickschicht-, die Dünnschicht-Technologie oder speziell die Siliziumtechnologie zum Aufbau von Feuchtesensoren nutzen. Bei diesen Sensoren erfolgt eine kapazitive Messung oder eine resistive Messung des Feuchteanteils in Photolackschichten, porösen Keramiken, porösem Siliziumdioxid, und dergleichen. Derartige Sensoren sind beispielsweise bei N. Yamazoe, Y. Shimizu: Humidity Sensors: Principles and Applications, Sensors and Actuators 10, 1986, S 379, und J. Werno: Fortschrittberichte VDI "Untersuchungen an integrierten Dünnfilmsensorarrays zur Analyse von Gasgemischen mittels statischer und dynamischer Verfahren", Reihe 9, Nr. 237 VDI Verlag Düsseldorf (1996), beschrieben. Es ist jedoch offensichtlich, daß der direkte Kontakt der dünnen Schichten mit Feststoffen schnell zu einer Zerstörung der dünnen Schichten führen würde. Ferner ist die resistive Messung beispielsweise bei elektrisch nicht leitenden Ölen nicht anwendbar.

Aus dem Stand der Technik sind des weiteren Feuchtigkeitsanzeiger für Blumentöpfe bekannt und käuflich, die auf dem Prinzip beruhen, daß sich ein geeignetes Material verfärbt, wenn eine bestimmte Feuchtigkeit vorliegt. Nachteile bei diesem Feuchtigkeitsanzeiger sind Schwierigkeiten bei der augenscheinlichen Erkennung der Farbnuancen bei der Verfärbung und die damit verbundene erschwerte Schwellwerterkennung. Ferner behindert bei der Farberkennung häufig eine Verschmutzung durch den Feststoff die Farberkennung. Trotzdem wird bisher auf derartige einfache Feuchtefühler zurückgegriffen, da dieselben sehr kostengünstig sind.

Aus R. Kersjes, W. Mokwa: A fast liquid flow sensor with thermal isolation by oxide-filled trenches, Sensors and Actuators A 46-47 (1995) 373-379, sind Strömungssensoren bekannt, die aus einer Siliziumchipstruktur bestehen, in der eine Membran gebildet ist. Die dort beschriebenen Sensoren dienen zum Erfassen einer an einer Oberfläche des Chips vorliegenden Strömung.

Basierend auf dem genannten Stand der Technik besteht die Aufgabe der vorliegenden Erfindung darin, einen elektronischen, kostengünstigen Feuchtesensor zu schaffen, der sowohl als Feststoffeuchtesensor als auch als Leckagesensor einsetzbar ist.

Diese Aufgabe wird durch einen Sensor zur Bestimmung des Feuchtegehalts gemäß Anspruch 1 gelöst.

Der erfindungsgemäße Sensor zur Bestimmung des Feuchtegehalts weist einen Träger-Chip mit einer in demselben gebildeten Membran auf. Eine Heizeinrichtung zum Beheizen der Membran, eine erste Temperaturerfassungseinrichtung zum Erfassen der Temperatur der Membran und eine zweite Temperaturerfassungseinrichtung zum Erfassen der Umgebungstemperatur sind vorgesehen. Ferner weist der erfindungsgemäße Sensor eine Einrichtung zum Bestimmen des im Umgebungsbereich der Membran vorliegenden Feuchtegehalts auf der Grundlage der erfaßten Temperaturen auf.

Die vorliegende Erfindung ermöglicht es, einen elektronischen, kostengünstigen Feststoff-Feuchtesensor oder Leckagesensor aufzubauen, der mit Hilfe einer Batterie oder einer transpondertechnischen Übertragung betrieben werden kann. Anwendung kann der erfindungsgemäße Feuchtesensor beispielsweise bei der Feuchtemessung in Blumentöpfen oder zur Überwachung von Hohlräumen, in die bei Normalbetrieb keine Flüssigkeit eindringen darf, finden. Vorzugsweise ist der erfindungsgemäße Sensor als Mikrosystem in Silizium-Technologie ausgebildet. Dazu sind die Heizeinrichtung und die erste Temperaturerfassungseinrichtung in die Membran integriert, während die zweite Temperaturerfassungseinrichtung in den Träger-Chip integriert ist. Ferner können Einrichtungen zur thermischen Isolation zwischen der Heizeinrichtung und der zweiten Temperaturerfassungseinrichtung vorgesehen sein.

Gemäß der Erfindung ist auf der der Umgebung, in der der Feuchtegehalt bestimmt werden soll, zugewandten Oberfläche des Träger-Chips zumindest im. Bereich der Membran eine Schicht aus einem saugfähigen Material angeordnet.

Bei bevorzugten Ausführungsbeispielen der vorliegenden Erfindung besteht der Sensorchip aus Silizium und enthält eine rückseitengeätzte Membran. Die Membran wird über ein Heizelement beheizt und enthält zur Messung der Membrantemperatur einen Temperaturfühler. Zur Messung der Umgebungstemperatur enthält der Chip einen weiteren Temperaturfühler. Das Differenzsignal der beiden Temperaturfühler ist das Sensorsignal. Dieses Differenzsignal hängt von dem Umgebungsfeuchtegehalt ab.

Gemäß der vorliegenden Erfindung ist neben der Feuchtemessung in Gasen auch die Bestimmung des Feuchtegehalts in Feststoffen sowie die Erfassung einer Leckage mit einer direkten Benetzung des Sensors möglich. Ferner können bei dem erfindungsgemäßen Sensor die Feuchtemeßergebnisse direkt elektronisch verarbeitet werden. Unter Verwendung der Siliziumtechnologie ist der erfindungsgemäße Sensor mittels Verfahren der Massenfertigung kostengünstig herstellbar. Dies ist insbesondere vorteilhaft, wenn der Sensor verbreitet beispielsweise für die Messung der Feuchte in Blumentöpfen verwendet werden soll. Durch die Nutzung der Siliziumtechnologie ist es ferner möglich, die signalverarbeitende Elektronik direkt in einer sogenannten On-Chip-Integration auf dem Chip zu integrieren. Eine derartige Elektronik kann beispielsweise eine Signalverstärkung, die Steuerung der Spannungsversorgung sowie einen Treiber für einen optionalen Warnmelder zur Meldung kritischer Feuchtewerte enthalten.

Die erfindungsgemäße Verwendung des thermischen Betriebs hat gegenüber einem resistiven Prinzip Vorteile, da Meßmedium und Sensor galvanisch voneinander getrennt sind. Im Vergleich zu einem kapazitiven Prinzip ergibt sich gemäß der vorliegenden Erfindung ein großes Nutzsignal und ein geringer Einfluß von Störfeldern. Gegenüber makroskopisch aufgebauten thermischen Feuchtesensoren ergeben sich aufgrund der Verwendung der Mikromechanik zur thermischen Isolation lokal begrenzt heizbare Strukturen. Dies hat eine geringere notwendige Heizleistung zur Folge, um eine ausreichende Temperaturerhöhung zu bewirken, die ein gutes Meßsignal ermöglicht. Zudem können kleine Strukturen mit einer geringen Wärmekapazität aufgebaut werden, um einen Pulsbetrieb des Sensors und eine Funktion innerhalb kleiner Zeitintervalle zu ermöglichen. Dabei ist beispielsweise ein Betriebspuls der Länge von 30 ms realistisch. Innerhalb der Zeit dieses Betriebspulses kann sich das Nutzsignal vollständig zeitlich entwickeln. Als sinnvoll hat sich hierbei eine zeitliche Periode der Heizpulse von 3 Sekunden erwiesen. Da nur innerhalb dieses Heizpulses Energie verbraucht wird, ergibt sich bei diesem speziellen Ausführungsbeispiel bei einer Batterie- oder einer Transponder-technischen Spannungsversorgung im Vergleich zu einem Dauerbetrieb eine um den Faktor 100 längere Betriebszeit.

Weiterbildungen der vorliegenden Erfindung sind in den abhängigen Ansprüchen dargelegt.

Bevorzugte Ausführungsbeispiele der vorliegenden Erfindung werden nachfolgend bezugnehmend auf die beiliegenden Zeichnungen näher erläutert. Es zeigen:
- Fig. 1: eine schematische Querschnittdarstellung eines Ausführungsbeispiels des erfindungsgemäßen Feuchtesensors; und
- Fig. 2: eine schematische Querschnittdarstellung eines Ausführungsbeispiels eines gehäusten Feuchtesensors gemäß der vorliegenden Erfindung.

Die folgende Beschreibung wird anhand eines bevorzugten Ausführungsbeispiels eines erfindungsgemäßen Feuchtesensors, der in Siliziumtechnologie gefertigt ist, durchgeführt, wobei es offensichtlich ist, daß der erfindungsgemäße Feuchtesensor mittels anderer Technologien hergestellt werden kann. In den Figuren sind für gleiche Elemente jeweils gleiche Bezugszeichen verwendet.

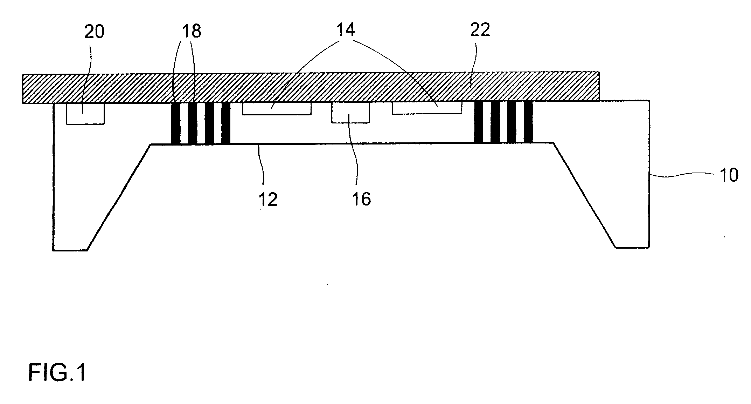

Wie in Fig. 1 gezeigt ist, besteht der Grundkörper des erfindungsgemäßen Feuchtesensor aus einem Siliziumchip 10. Der Siliziumchip 10 weist eine von der Rückseite her geätzte Membran 12 auf. In der Membran 12 sind Heizelemente 14 sowie ein Temperaturfühler 16 vorgesehen. Ferner sind in der Membran 12 Oxidringe 18 vorgesehen, die zur thermischen Isolation der Heizelemente 14 und des Temperaturfühlers 16 von dem verbleibenden Teil des Siliziumchips 10 dienen. Wie ferner in Fig. 1 dargestellt ist, ist in dem Siliziumchip 10 ein Temperaturfühler 20 zur Erfassung der Umgebungstemperatur vorgesehen. Dieser Temperaturfühler 20 ist durch die Oxidringe 18, die zur thermischen Isolation dienen, von den Heizelementen 14 thermisch isoliert. Die Oxidringe 18 umgeben bei einem bevorzugten Ausführungsbeispiel die Heizelemente 14 vollständig und durchdringen ferner die Membran vollständig. Ferner kann, wie in Fig. 1 dargestellt ist, eine Mehrzahl von Ringen nebeneinander angeordnet sein.

Bei dem in Fig. 1 dargestellten Ausführungsbeispiel ist auf der der Umgebung zugewandten Oberfläche des Siliziumchips 10 eine Schicht 22 aus einem saugfähigen Material vorgesehen. Die Schicht 22 kann beispielsweise mittels eines Klebers auf der Oberfläche des Siliziumchips 10 angebracht sein. Der saugfähige Stoff ist vorzugsweise auf der gesamten Oberfläche des Siliziumchips 10 vorgesehen, jedoch zumindest im Bereich der Membran und der temperatur erfassungs einrichtung 20. Der saugfähige Stoff kann beispielsweise Holz, Papier, Karton oder ein ähnliches Material sein. Eine Elektronik zur Auswertung der von den Temperaturfühlern 16 und 20 erhaltenen Temperatursignale sowie eine Treiberschaltung zum Treiben der Heizelemente 14 sind vorzugsweise in dem Siliziumchip 10 bzw. in der Membran 12 integriert.

Im Betrieb des Feuchtesensors wird nun die Membran 12 mittels der Heizelemente 14 erwärmt. Der Temperaturfühler 16 erfaßt die Temperatur der Membran 12. Der Temperaturfühler 20 erfaßt bei dem dargestellten Ausführungsbeispiel durch den saugfähigen Stoff 22 die Umgebungstemperatur. Der saugfähige Körper 22 nimmt nun Flüssigkeit, das heißt Feuchtigkeit, aus der direkten Umgebung auf. Somit wird der saugfähige Stoff feucht und besitzt eine höhere thermische Leitfähigkeit. Somit transportiert die saugfähige Schicht 22 Wärme von der beheizten Membran ab. Dies hat eine Temperaturabsenkung der Membran zur Folge. Dies hat wiederum zur Folge, daß das Temperaturdifferenzsignal zwischen den beiden Temperaturfühlern 16 und 20 abnimmt. Je feuchter der saugfähige Stoff ist, desto kleiner ist das Temperaturdifferenzsignal zwischen diesen beiden Temperaturfühlern 16 und 20. Es ist somit möglich, mittels der Ausgangssignale der beiden Temperaturfühler 16 und 20 die in der Umgebung herrschende Feuchtigkeit zu erfassen.

Der oben beschriebene Effekt tritt auch bei einer direkten Benetzung durch eine Flüssigkeit auf. Dabei schützt bei einer Anwendung des erfindungsgemäßen Sensors als Feuchtesensor in Feststoffen das saugfähige Material die Chipoberfläche.

Zusätzlich kann gemäß der vorliegenden Erfindung bei der Sensorauswertung auch das dynamische thermische Verhalten der Membran 12 ausgenutzt werden. Dabei können die Heizelemente 14 gepulst betrieben werden. Bei einem Pulsbetrieb der Heizelemente ergibt sich eine zeitliche Verzögerung der Aufheizung der Membran 12 in Abhängigkeit vom Feuchtegrad auf der Membran, d.h. des Feuchtegehalts in der Umgebung. Hierbei werden zu unterschiedlichen Zeiten unterschiedliche Temperaturdifferenzen zwischen den beiden Temperaturfühlern 16 und 20 erfaßt. In diesem Fall kann die Zeit, um einen gewissen Schwellwert zu erreichen, ebenfalls zur Messung des Feuchtegrads ausgenutzt werden. In jedem Fall kann eine Warneinrichtung vorgesehen sein, die bei Unterschreiten eines bestimmten Grenzwertes ein Warnsignal auslöst. Ein solches Warnsignal kann optischer oder akustischer Natur sein.

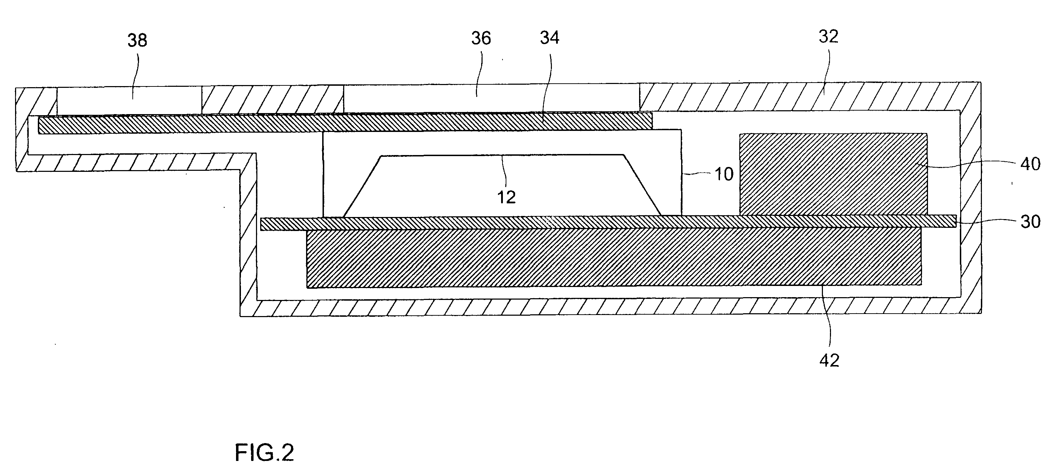

Fig. 2 zeigt eine Darstellung eines gehäusten Feuchtesensors gemäß der vorliegenden Erfindung. Der Chip 10 mit der Membran 12 ist dabei auf einer Trägerplatte 30 angebracht. Die Trägerplatte 30 ist an einem Gehäuse 32 angebracht. Auf der der zu messenden Umgebung zugewandten Oberfläche des Chips 10 ist wiederum eine Schicht 34 aus einem Flüssigkeit-saugfähigen Material angebracht. Bei dem in Fig. 2 dargestellten Ausführungsbeispiel ist diese Schicht 34 über den linken Rand des Chips 10 hinaus verlängert. Das Gehäuse 32 weist Öffnungen 36 und 38 auf, über die ein Kontakt der saugfähigen Schicht 34 zu der Umgebung hergestellt wird. Über die Öffnungen 36 und 38 kann über die saugfähige Schicht 34 Flüssigkeit zu dem Chip 10 transportiert werden.

Wie in Fig. 2 dargestellt ist, sind an der Trägerplatte 30 ferner ein Warnmelder 40 sowie eine Spannungsversorgung 42 angebracht. Der Warnmelder 40 kann ein beliebiger akustischer Melder, beispielsweise ein Piezomelder, oder ein optischer Melder sein, wobei im Falle eines optischen Melders vorzugsweise eine weitere Öffnung in dem Gehäuse vorgesehen ist, so daß ein optisch gegebener Alarm von außen erkennbar ist. Die Leistungsversorgung 42 kann beispielsweise durch eine Batterie gebildet sein. Ferner kann die Leistungsversorgung 42 einen geeigneten Aufbau aufweisen, um den Feuchtesensor der vorliegenden Erfindung mittels einer transpondertechnischen Übertragung zu betreiben. Der Chip 10 weist gemeinsam mit der Membran 12 vorzugsweise den bezugnehmend auf Fig. 1 beschriebenen Aufbau auf.

Wie oben bereits dargelegt eignet sich der erfindungsgemäße Sensor sowohl zur Messung des Feuchtegrades in Feststoffen, beispielsweise in Erde, Sand oder Zement, die mit dem System in Kontakt stehen, als auch zur Überwachung von Hohlräumen, in die bei Normalbetrieb keine Flüssigkeit eindringen darf, als ein Leckagesensor. Der saugfähige Stoff auf der der Umgebung zugewandten Seite des Chips ist bei der Verwendung des Sensors als Feststoff-Feuchtesensor obligatorisch, während derselbe bei der Verwendung als Leckagesensor optional ist. Der saugfähige Stoff kann aus beliebigen geeigneten Materialien, beispielsweise Holz, Papier, Pappe, poröser Keramik und dergleichen bestehen. Der Chip besteht vorzugsweise aus Silizium, kann jedoch auch aus einem dielektrischen Material bzw. einer Kombination derselben gebildet sein. Die Heizelemente können beispielsweise aus Polysiliziumbereichen oder einem Transistor gebildet sein. In gleicher Weise können die Temperaturfühler in bekannter Weise aus einem Polysiliziumwiderstand, einer Diode oder einem Transistor gebildet sein.

## Patentansprüche

1. Sensor zur Bestimmung des Feuchtegehalts mit folgenden Merkmalen:
einem Trägerchip (10) mit einer in demselben gebildeten Membran (12);
einer Heizeinrichtung (14) zum Beheizen der Membran (12);
einer ersten Temperaturerfassungseinrichtung (16) zum Erfassen der Temperatur der Membran (12),
wobei die Heizeinrichtung (14) und die erste Temperaturerfassungseinrichtung (16) in die Membran (12) integriert sind;
einer zweiten Temperaturerfassungseinrichtung (20) zum Erfassen der Umgebungstemperatur, die in den Trägerchip (10) integriert ist; und
einer Einrichtung zum Bestimmen des im Umgebungsbereich der Membran (12) vorliegenden Feuchtegehalts auf der Grundlage der erfaßten Temperaturen,
wobei auf der der Umgebung zugewandten Oberfläche des Trägerchips (10) zumindest im Bereich der Membran (12) und im Bereich der zweiten Temperaturerfassungseinrichtung (20) eine Schicht (22) aus einem saugfähigen Material angeordnet ist.

2. Sensor gemäß Anspruch 1, der ferner eine Einrichtung (18) zur thermischen Isolation zumindest zwischen der Heizeinrichtung (14) und der zweiten Temperaturerfassungseinrichtung (20) aufweist.

3. Sensor gemäß Anspruch 2, bei dem die Einrichtung (18) zur thermischen Isolation durch die Membran (12) durchdringende thermische isolierende Ringe gebildet ist, die die Heizeinrichtung (14) und die erste Temperaturerfassungseinrichtung (16) umgeben.

4. Sensor gemäß Anspruch 3, bei dem die thermisch isolierenden Ringe (18) Oxidringe sind.

5. Sensor gemäß einem der Ansprüche 1 bis 4, bei dem der Trägerchip (10) und die Membran (12) aus Silizium bestehen.

6. Sensor gemäß Anspruch 5, bei dem die Heizeinrichtung (14) durch einen Polysiliziumbereich oder durch einen Transistor gebildet ist.

7. Sensor gemäß Anspruch 5 oder 6, bei dem die erste und die zweite Temperaturerfassungseinrichtung (16, 20) durch einen Polysiliziumwiderstand, eine Diode oder einen Transistor gebildet sind.

8. Sensor gemäß einem der Ansprüche 1 bis 7, bei dem die Schicht (22) aus saugfähigem Material aus Holz, Papier, Karton oder einer porösen Keramik besteht.

9. Sensor gemäß einem der Ansprüche 1 bis 8, bei dem die Einrichtung zum Bestimmen des Feuchtegrads in den Trägerchip (10) und die in demselben gebildete Membran (12) integriert ist.

10. Sensor gemäß einem der Ansprüche 1 bis 9, bei dem der Trägerchip (10), die Heizeinrichtung (14), die Temperaturerfassungseinrichtungen (16, 20) und die Einrichtung zum Bestimmen des Feuchtegehalts in einem Gehäuse (32) angeordnet sind, das zumindest im Bereich der Membran (12) eine Öffnung (36) aufweist.

11. Sensor gemäß Anspruch 10, bei dem der Trägerchip (10) auf einer Trägerplatte (30) angebracht ist, an der ferner eine Leistungsversorgungseinrichtung (42) angebracht ist.

12. Sensor gemäß Anspruch 10 oder 11, bei dem in oder an dem Gehäuse (32) ferner eine Warneinrichtung (40) zum Signalisieren eines vorbestimmten Feuchtegehalts vorgesehen ist.

13. Sensor gemäß einem der Ansprüche 1 bis 12, bei dem die Einrichtung zum Bestimmen des Feuchtegehalts eine Einrichtung zum Vergleichen der erfaßten Temperaturen aufweist, wobei der Feuchtegehalt auf der Grundlage dieses Vergleichs bestimmt wird.

14. Sensor gemäß Anspruch 13, der eine Einrichtung zum pulsartigen Treiben der Heizeinrichtung (14) aufweist, wobei die Einrichtung zum Vergleichen die erfaßten Temperaturen jeweils zu unterschiedlichen Zeiten vergleicht, wobei der Feuchtegehalt auf der Grundlage der Ergebnisse und der Zeitpunkte der Vergleiche bestimmt wird.

## Claims

1. A sensor for determining the moisture content, comprising:
a carrier chip (10) having a diaphragm (12) formed therein;
a heating means (14) for heating the diaphragm (12);
a first temperature detection means (16) for detecting the temperature of the diaphragm (12),
the heating means (14) and the first temperature detection means (16) being integrated in the diaphragm (12);
a second temperature detection means (20) for detecting the ambient temperature, said second temperature detection means (20) being integrated in the carrier chip (10); and
a means for determining, on the basis of the temperatures detected, the moisture content existing in the area surrounding the diaphragm (12),
a layer (22) consisting of an absorbent material being arranged, at least in the area of the diaphragm (12) and in the area of the second temperature detection means (20), on the surface of the carrier chip (10) facing the surroundings.

2. A sensor according to claim 1, comprising, in addition, a means (18) for providing thermal insulation at least between the heating means (14) and the second temperature detection means (20).

3. A sensor according to claim 2, wherein said means (18) used for providing thermal insulation is formed by thermally insulating rings which perentrate the diaphragm (12) and which surround the heating means (14) and the first temperature detection means (16).

4. A sensor according to claim 3, wherein the thermally insulating rings (18) are oxide rings.

5. A sensor according to one of the claims 1 to 4, wherein the carrier chip (10) and the diaphragm (12) consist of silicon.

6. A sensor according to claim 5, wherein the heating means (14) is formed by a polysilicon area or by a transistor.

7. A sensor according to claim 5 or 6, wherein the first and the second temperature detection means (16, 20) are formed by a polysilicon resistor, a diode or a transistor.

8. A sensor according to one of the claims 1 to 7, wherein the layer (22) of absorbent material consists of wood, paper, cardboard or of porous ceramics.

9. A sensor according to one of the claims 1 to 8, wherein the means for determining the degree of moisture is integrated in the carrier chip (10) and in the diaphragm (12) formed in said carrier chip (10).

10. A sensor according to one of the claims 1 to 9, wherein the carrier chip (10), the heating means (14), the temperature detection means (16, 20) and the means for determining the moisture content are arranged in a housing (32) having an opening (36) at least in the area of the diaphragm (12).

11. A sensor according to claim 10, wherein the carrier chip (10) is arranged on a support plate (30) which has additionally attached thereto a power supply means (42).

12. A sensor according to claim 10 or 11, wherein an alarm means (40) for signalling a predetermined moisture content is additionally provided in or on the housing (32).

13. A sensor according to one of the claims 1 to 12, wherein said means for determining the moisture content includes a means for comparing the temperatures detected, the moisture content being determined on the basis of this comparison.

14. A sensor according to claim 13, comprising a means for driving the heating means (14) in a pulselike mode of operation, said comparing means comparing the detected temperatures at different times, and the moisture content being determined on the basis of the results of said comparisons and the times at which said comparisons are carried out.

## Revendications

1. Détecteur pour déterminer la teneur en humidité, aux caractéristiques suivantes:
une puce support (10) avec une membrane (12) formée dans celle-ci ;
un dispositif chauffant (14) destiné à chauffer la membrane (12) ;
un premier dispositif capteur de température (16) destiné à capter la température de la membrane (12),
le dispositif chauffant (14) et le premier dispositif capteur de température (16) étant intégrés à la membrane ;
un second dispositif capteur de température (20) destiné à capter la température ambiante, lequel est intégré dans la puce support (10); et
un dispositif destiné à déterminer la teneur en humidité présente dans la zone entourant la membrane (12), sur base des températures captées,
sur la surface de la puce support (10) orientée vers l'environnement étant disposée, au moins dans la zone de la membrane (12) et dans la zone du second dispositif capteur de température (20), une couche (22) d'un matériau absorbant.

2. Détecteur suivant la revendication 1, présentant, par ailleurs, un dispositif (18) d'isolation thermique au moins entre le dispositif chauffant (14) et le second dispositif capteur de température (20).

3. Détecteur suivant la revendication 2, dans lequel le dispositif (18) d'isolation thermique est constitué par des anneaux d'isolation thermique pénétrant à travers la membrane (12) et entourant le dispositif chauffant (14) et le premier dispositif capteur de température (16).

4. Détecteur suivant la revendication 3, dans lequel les anneaux d'isolation thermique (18) sont des anneaux d'oxyde.

5. Détecteur suivant l'une des revendications 1 à 4, dans lequel la puce support (10) et la membrane (12) sont réalisées en silicium.

6. Détecteur suivant la revendication 5, dans lequel le dispositif chauffant (14) est constitué par une zone en polysilicium ou par un transistor.

7. Détecteur suivant la revendication 5 ou 6, dans lequel le premier et le second dispositif capteur de température (16, 20) sont constitués par une résistance en polysilicium, une diode ou un transistor.

8. Détecteur suivant l'une des revendications 1 à 7, dans lequel la couche (22) est réalisée en un matériau absorbant en bois, papier, carton ou une céramique poreuse.

9. Détecteur suivant l'une des revendications 1 à 8, dans lequel le dispositif destiné à déterminer la teneur en humidité est intégré dans la puce support (10) et dans la membrane (12) formée dans cette dernière.

10. Détecteur suivant l'une des revendications 1 à 9, dans lequel la puce support (10), le dispositif chauffant (14), les dispositifs capteurs de température (16, 20) et le dispositif destiné à déterminer la teneur en humidité sont disposés dans un boîtier (32) présentant, au moins dans une zone de la membrane (12), une ouverture (36).

11. Détecteur suivant la revendication 10, dans lequel la puce support (10) est placée sur une plaque de support (30) sur laquelle est placé, par ailleurs, un dispositif d'alimentaton de puissance (42).

12. Détecteur suivant la revendication 10 ou 11, dans lequel est, par ailleurs, prévu, dans ou sur le boîtier (32), une dispositif d'avertissement (40) destiné à signaler une teneur en humidité prédéterminée.

13. Détecteur suivant l'une des revendications 1 à 12, dans lequel le dispositif destiné à déterminer la teneur en humidité présente un dispositif destiné à comparer les températures captées, la teneur en humidité étant déterminée sur base de cette comparaison.

14. Détecteur suivant la revendication 13, présentant un dispositif pour faire fonctionner le dispositif chauffant (14) sous forme d'impulsions, le dispositif de comparaison comparant les températures captées chaque fois à des moments différents, la teneur en humidité étant déterminée sur base des résultats et des moments des comparaisons.
